# EUROPEAN PATENT APPLICATION

(11) **EP 4 783 214 A1**
(43) Date of publication of application: **29.07.2026**
(21) Application number: 24922020.3
(22) Date of filing: 11.12.2024
(51) Int. Cl.: H01H 13/04, B60R 16/02

(54) **SWITCH DEVICE AND METHOD OF MANUFACTURING SAME**

(30) Priority: 31.01.2024 JP 2024013252
(71) Applicant: DaikyoNishikawa Corporation, Higashihiroshima-shi, Hiroshima, 739-0049 (JP)
(72) Inventor: YAMASHITA, Hideki, Higashihiroshima-shi, Hiroshima 739-0049 (JP); MANTOKU, Yoshihisa, Higashihiroshima-shi, Hiroshima 739-0049 (JP); SHINJO, Ryunosuke, Higashihiroshima-shi, Hiroshima 739-0049 (JP); HORINO, Masahiro, Higashihiroshima-shi, Hiroshima 739-0049 (JP)
(74) Representative: Lorenz Seidler Gossel Part. mbB
(86) International application number: PCT/JP2024/043860
(87) International publication number: WO 2025/164102

(57) **Abstract**

A switch device (10) includes: a base material (20) formed by integrally molding a rigid portion (21) and a soft portion (30); a skin material (40) provided on the front side of the base material so as to cover an opening of the rigid portion, and a switch actuating member (63) disposed on the back side of the base material at a position corresponding to the opening. The switch actuating member and the peripheral edge of the opening are spaced apart from each other in a direction orthogonal to a direction in which the switch actuating member is depressed. The soft portion is positioned between the skin material and the switch actuating member on the front side of the opening of the base material. The soft portion includes a stretch section (31) with rubber elasticity. The stretch section constitutes a portion corresponding to a region between the switch actuating member and the peripheral edge of the opening.

## Description

### TECHNICAL FIELD

The present disclosure relates to switch devices and methods for manufacturing the same.

### BACKGROUND ART

Conventionally, push-type switch devices are known as switch devices for controlling operations of various kinds of equipment.

Such a push-type switch device includes a rigid base material, a switch actuating member fitted into an opening formed in the base material, and a skin material provided in a stretched state on a surface of the base material so as to cover a surface of the switch actuating member. This switch device is configured to perform a switching operation when the switch actuating member is depressed toward the back side of the base material through the skin material (see, for example, Patent Document 1).

### CITATION LIST

### PATENT DOCUMENTS

PATENT DOCUMENT 1: Japanese Unexamined Patent Publication No. 2014-212053

### SUMMARY OF THE INVENTION

### TECHNICAL PROBLEM

In the push-type switch device as described above, when the switch actuating member is depressed through the skin material, the skin material is pressed against the peripheral edge of the opening of the base material and becomes taut, causing local elongation of the skin material starting from the peripheral edge of the opening of the base material. Accordingly, as the number of pressing operations of the switch device increases, the pressed portion of the skin material undergoes permanent deformation, causing wrinkles.

An object of the present disclosure is to suppress permanent deformation of a pressed portion of a skin material in a push-type switch device.

### SOLUTION TO THE PROBLEM

In order to achieve the above object, according to the present disclosure, a soft portion having rubber elasticity is provided between the skin material and the switch actuating member so that the depressing operation on the switch actuating member can be performed by flexing the soft portion.

Specifically, a first aspect of the present disclosure is directed to a switch device. The switch device according to the first aspect includes: a base material including a rigid portion having an opening; a skin material provided on a front side of the base material so as to cover the opening; and a switch actuating member disposed on a back side of the base material at a position corresponding to the opening. The switch device is configured such that, when the skin material is pressed, a pressing force is exerted on the switch actuating member to depress the switch actuating member. The switch actuating member and a peripheral edge of the opening are positioned apart from each other in a direction orthogonal to a direction in which the switch actuating member is depressed. A soft portion that is more flexible than the rigid portion and has rubber elasticity is provided between the skin material and the switch actuating member. The soft portion is supported by the rigid portion and is positioned within the opening or on a front side of the opening, and includes a stretch section that constitutes a portion corresponding to a region between the switch actuating member and the peripheral edge of the opening.

A second aspect of the present disclosure is the switch device according to the first aspect, in which the skin material and the soft portion are bonded to each other in a region corresponding to the opening.

A third aspect of the present disclosure is the switch device according to the first or second aspect, in which the soft portion is provided on a front side of the rigid portion so as to cover the opening.

A fourth aspect of the present disclosure is the switch device according to the first or second aspect, in which the soft portion is provided so as to close the opening of the rigid portion, and a surface of the soft portion and a surface of the rigid portion are flush with each other.

A fifth aspect of the present disclosure is the switch device according to the first or second aspect, in which the soft portion and the rigid portion are integrally molded to constitute the base material.

A sixth aspect of the present disclosure is directed to a method for manufacturing the switch device according to the first aspect. The method for manufacturing the switch device according to the sixth aspect includes: preparing a base material having a flat surface, the base material including a rigid portion and a soft portion that are integrally molded; and laminating the skin material on the flat surface of the base material by vacuum pressure forming or pressure forming.

### ADVANTAGES OF THE INVENTION

According to the first aspect, the switch actuating member and the peripheral edge of the opening of the base material are positioned apart from each other in a direction orthogonal to the direction in which the switch actuating member is depressed. The soft portion having rubber elasticity is provided between the skin material and the switch actuating member. The soft portion is supported by the rigid portion and is positioned within the opening or on the front side of the opening, and includes the stretch section that constitutes a portion corresponding to the region between the switch actuating member and the peripheral edge of the opening. When the switch actuating member is depressed through the skin material, the soft portion 30 undergoes bending deformation accompanied by elongation of the stretch section. At this time, since the deflection occurring in the soft portion is relatively gradual, local elongation occurring in the skin material is reduced. As a result, it is possible to suppress permanent deformation of the pressed portion of the skin material.

According to the second aspect, the skin material and the soft portion are bonded to each other in the region corresponding to the opening. When the soft portion undergoes bending deformation due to a depressing operation on the switch actuating member, the skin material similarly undergoes bending deformation in accordance with the deformation of the soft portion. As a result, elongation occurring in the skin material can be distributed around the pressed portion. This contributes to suppressing permanent deformation of the pressed portion of the skin material.

According to the third aspect, the opening of the base material is covered by the soft portion provided on the front side of the rigid portion. For example, in a configuration in which the soft portion is provided only within the opening of the base material and the peripheral edge of the opening of the base material is abutted against the skin material, a seam is formed on the front side at the boundary between the peripheral edge of the opening of the base material and the soft portion. This seam may be reflected on the skin material as a parting line, which may impair the appearance of the switch device. In contrast, in the configuration in which the opening of the base material is covered by the soft portion, a seam between the rigid portion and the soft portion is not formed on the front side, and no parting line appears on the skin material. Accordingly, the aesthetic appearance of the switch device can be improved.

According to the fourth aspect, the opening of the rigid portion is closed by the soft portion, and the surface of the soft portion and the surface of the rigid portion are flush with each other. This can suppress formation of a step at the boundary between the peripheral edge of the opening of the base material and the soft portion. As a result, a parting line corresponding to a seam between the rigid portion and the soft portion can be made less likely to be reflected on the skin material. This contributes to improving the aesthetic appearance of the switch device.

According to the fifth aspect, the base material includes the rigid portion and the soft portion. The base material can be molded by two-shot molding. By using such a two-shot molded article as the base material, the number of parts and the assembly man-hours required for manufacturing the switch device can be reduced.

According to the sixth aspect, the base material having a flat surface is prepared by integrally molding the rigid portion and the soft portion, and the skin material is laminated on the surface of the base material. In the step of laminating the skin material, vacuum pressure forming or pressure forming is used. By using vacuum pressure forming or pressure forming, the skin material can be laminated on the surface of the base material with good conformability. As a result, formation of steps on the surface of the skin material can be suppressed. This contributes to manufacturing the switch device with an excellent appearance.

### BRIEF DESCRIPTION OF THE DRAWINGS

[FIG. 1] FIG. 1 is a perspective view of a center console in which a switch device according to a first embodiment is incorporated, as viewed obliquely from the left side of a vehicle body.
[FIG. 2] FIG. 2 is a sectional view taken along line II-II in FIG. 1, illustrating the structure of the switch device according to the first embodiment.
[FIG. 3] FIG. 3 is a sectional view illustrating a state in which a pressing operation is performed on the switch device according to the first embodiment.
[FIG. 4] FIG. 4 is a sectional view of a vacuum pressure forming apparatus used for manufacturing the switch device.
[FIG. 5] FIG. 5 is a sectional view of the vacuum pressure forming apparatus in a heating step and an evacuation step.
[FIG. 6] FIG. 6 is a sectional view of the vacuum pressure forming apparatus in a skin-material pressing step.
[FIG. 7] FIG. 7 is a sectional view of the vacuum pressure forming apparatus in a pressurizing step.
[FIG. 8] FIG. 8 is a sectional view showing an assembly step in manufacture of the switch device according to the first embodiment.
[FIG. 9] FIG. 9 is a sectional view corresponding to FIG. 2, illustrating the structure of a switch device according to a second embodiment.
[FIG. 10] FIG. 10 is a sectional view illustrating a state in which a pressing operation is performed on the switch device according to the second embodiment.
[FIG. 11] FIG. 11 is a sectional view corresponding to FIG. 2, illustrating the structure of a switch device according to a third embodiment.
[FIG. 12] FIG. 12 is a sectional view corresponding to FIG. 2, illustrating the structure of a switch device according to a fourth embodiment.

### DESCRIPTION OF EMBODIMENTS

Hereinafter, exemplary embodiments will be described in detail with reference to the drawings. In the following embodiments, a switch device according to the present disclosure will be described using an example in which the switch device is applied to a center console. The drawings are intended to conceptually illustrate the technology of the present disclosure. Therefore, in the drawings, dimensions, proportions, or numbers may be exaggerated or simplified in order to facilitate understanding of the technology of the present disclosure.

### <<First Embodiment>>

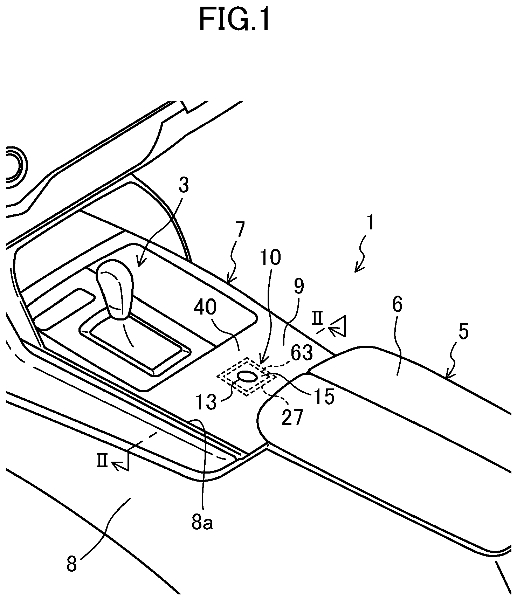

A switch device 10 according to a first embodiment is incorporated in a center console 1 shown in FIG. 1. The center console 1 is installed at the front center of a vehicle body floor between a driver's seat and a passenger seat of an automobile. The center console 1 includes a shift operation portion 3, a box portion 5, and a console panel 7. The console panel 7 is an example of a vehicle interior component.

The shift operation portion 3 is used to operate a transmission mounted in the automobile. The shift operation portion 3 is provided near the front end of the center console 1. The shift operation portion 3 includes a shift lever and an indicator that displays the operation position of the shift lever.

The box portion 5 is a storage box having a storage space therein. The box portion 5 is provided at the rear of the center console 1. The upper part of the box portion 5 is configured to be opened and closed by a lid 6. The lid 6 can be used as an armrest when the box portion 5 is in a closed state.

The console panel 7 constitutes an outer portion of the center console 1. The console panel 7 has a U-shaped cross section that opens downward. The shift operation portion 3 is mounted on the console panel 7. The console panel 7 includes a console panel body 8 and a cover panel 9.

The console panel body 8 is a main component of the console panel 7. A mounting opening 8a is formed in the upper surface of the console panel body 8. The cover panel 9 is fitted into the mounting opening 8a of the console panel body 8 to constitute an upper surface portion of the console panel 7.

### - Configuration of Switch Device -

The switch device 10 includes a portion of the cover panel 9. The switch device 10 is provided between the shift operation portion 3 and the box portion 5 in the center console 1. A light-transmitting display portion 11 is provided in a region of the cover panel 9 that constitutes the switch device 10. The light-transmitting display portion 11 is a portion that illuminates and displays an icon 13 (shown as "O" in FIG. 1 for convenience), and constitutes an operation portion 15 of the switch device 10. The operation portion 15 receives a user's pressing operation performed on the switch device 10.

The operation portion 15 is constituted by a portion of the cover panel 9, and its position can be confirmed by display of the icon 13. That is, the switch device 10 is operated by pressing a region of the light-transmitting display portion 11 where the icon 13 is displayed. A function of the switch device 10 is, for example, to switch the operating state of an onboard system indicated by the icon 13. When the icon 13 is not illuminated and displayed, the light-transmitting display portion 11 has the same appearance as other portions of the console panel 7 and becomes invisible.

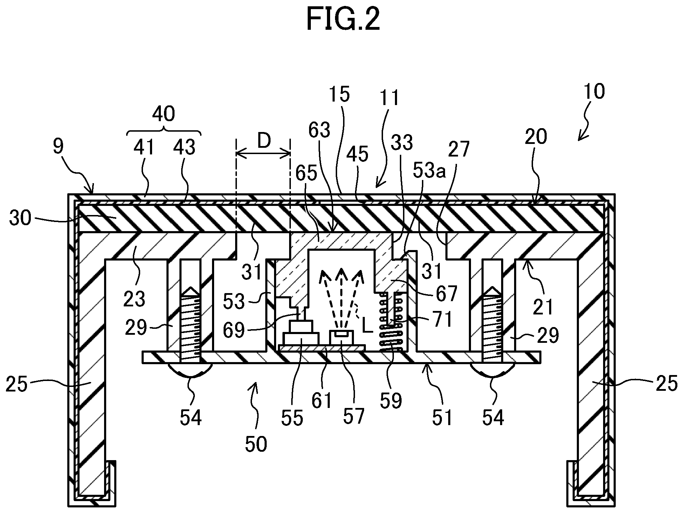

As shown in FIG. 2, the switch device 10 includes a base material 20, a skin material 40, and a functional module 50 including a switch component 55 and a switch actuating member 63. The base material 20 and the skin material 40 constitute the cover panel 9. The switch device 10 is configured such that, when the skin material 40 is pressed, a pressing force is exerted on the switch actuating member 63 to depress the switch actuating member 63. A pressing operation can thus be performed on the switch component 55 via the switch actuating member 63.

### <Base Material>

The base material 20 is a member that forms the base of the cover panel 9, and includes a rigid portion 21 and a soft portion 30. In this example, the base material 20 is formed by integrally molding the rigid portion 21 and the soft portion 30 by two-shot molding. The rigid portion 21 is a rigid resin portion. The rigid portion 21 is a constituent portion serving as the base of the base material 20, and has light-shielding properties. As used in the present specification, "light-shielding properties" mean opaque properties that block visible light. The rigid portion 21 includes a front plate portion 23 and side plate portions 25.

The front plate portion 23 is a plate-shaped portion located on the front side of the base material 20, and constitutes an upper plate portion of the cover panel 9. The side plate portions 25 are plate-shaped portions extending at least from both sides of the peripheral edge of the front plate portion 23 in the vehicle width direction toward the back side of the base material 20, and are inserted into the mounting opening 8a of the console panel body 8. In the front plate portion 23, a first opening 27 is formed such that a location corresponding to the operation portion 15 is included inside the first opening 27.

A plurality of bosses 29 (only two are shown in FIG. 2) is integrally provided on the back surface of the front plate portion 23. Each boss 29 is provided around the first opening 27 and protrudes toward the back side of the base material 20. The plurality of bosses 29 is used as fixing portions for fixing a support panel 51 to the base material 20. Although not shown, the base material 20 is further provided with claw portions etc. for attachment to the console panel body 8.

The rigid portion 21 is made of synthetic resin. Examples of materials for the rigid portion 21 include polypropylene (PP), acrylonitrile butadiene styrene (ABS) resin, polycarbonate (PC), and a composite of polycarbonate (PC) and acrylonitrile butadiene styrene (ABS) resin (PC-ABS).

The soft portion 30 is a plate-shaped portion provided on the surface of the front plate portion 23 of the rigid portion 21, and is molded integrally with the rigid portion 21 to constitute the base material 20. The soft portion 30 is supported by the rigid portion 21, located on the front side of the first opening 27, and provided on the front side of the rigid portion 21 so as to cover the first opening 27. In this example, the soft portion 30 is not provided within the first opening 27. The soft portion 30 is positioned between the skin material 40 and the switch actuating member 63. The surface of the base material 20 is formed as a flat surface by the soft portion 30.

The soft portion 30 is more flexible than the rigid portion 21 and has rubber elasticity. The soft portion 30 has relatively low hardness. The Type A hardness of the soft portion 30 is, for example, about 1 to 90, and more preferably about 10 to 15. As used herein, the "Type A hardness" refers to a hardness value measured using a Type A durometer for general medium-hardness rubber materials, as specified in JIS K 6253. The thickness of the soft portion 30 is, for example, about 1 mm to 10 mm.

The soft portion 30 is bonded to the skin material 40 at least in a region of the rigid portion 21 corresponding to the first opening 27. An adhesive, a pressure-sensitive adhesive, or the like is used for bonding the skin material 40 and the soft portion 30. In this example, the soft portion 30 is bonded to the skin material 40 over its entire surface. The soft portion 30 includes a stretch section 31 for allowing elongation and contraction. The stretch section 31 constitutes a portion corresponding to a region between the switch actuating member 63 and the peripheral edge of the first opening 27 of the base material 20. The stretch section 31 is a portion of the soft portion 30 that forms the bottom of a groove-shaped portion 33 described later. The stretch section 31 contributes to securing an amount by which the operation portion 15 can be pressed (stroke amount).

In this example, the soft portion 30 further has light-transmitting properties. As used in the present specification, "light-transmitting properties" mean properties that allow visible light to pass through. The light transmittance of the soft portion 30 in the thickness direction is 3% or more (e.g., 3% to 60%). The "light transmittance" as used in the present specification is measured in accordance with JIS K 7361 using a commercially available transmittance meter. For example, a spectroradiometer SR-LEDW manufactured by TOPCON CORPORATION is used as the transmittance meter.

The soft portion 30 is made of an elastomer. Thermoplastic elastomers such as styrenic elastomers (SBC), olefinic elastomers (TPO), vinyl chloride-based elastomers (TPVC), urethane-based elastomers (PU), ester-based elastomers (TPEE), and amide-based elastomers (TPAE) are used as materials for the soft portion 30. Thermosetting elastomers such as silicone rubber, fluororubber, and urethane rubber may also be used as materials for the soft portion 30.

### <Skin Material>

The skin material 40 is a sheet member constituting the surface of the cover panel 9. The skin material 40 is provided on the front side of the base material 20 so as to cover the first opening 27 together with the soft portion 30. The skin material 40 covers the surface of the base material 20 (in this example, the surface of the soft portion 30) and constitutes a design surface of the cover panel 9. An outer peripheral portion of the skin material 40 covers the side plate portions 25 of the base material 20 and is wrapped around to the back side of the base material 20, and is fixed to the base material 20 using a joining material such as double-sided tape or an adhesive.

The skin material 40 has both stretchability and flexibility. The thickness of the skin material 40 is, for example, about 0.2 mm to 3 mm. The skin material 40 includes a light-transmitting layer 41 and a light-shielding layer 43. The light-transmitting layer 41 is a layer forming the base of the skin material 40. The skin material 40 is formed by, for example, calendering, extrusion molding, slush molding, injection molding, in-mold skinning, or spray skinning.

The light-transmitting layer 41 is made of synthetic resin containing a pigment. Examples of materials for the light-transmitting layer 41 include polyvinyl chloride (PVC), thermoplastic olefin (TPO), and thermoplastic urethane (TPU). A material suitable for the adopted molding method is used as the material for the light-transmitting layer 41.

The thickness of the light-transmitting layer 41 is about 0.1 mm to 2.5 mm. The light-transmitting layer 41 contains a pigment such as a black pigment, but the content thereof is relatively low, and the light-transmitting layer 41 has light-transmitting properties. In this example, the light-shielding layer 43 contains only a black pigment as the pigment and exhibits a smoky gray tone. The light transmittance of the light-transmitting layer 41 in the thickness direction is, for example, about 3% to 60%.

The light-shielding layer 43 is provided over the entire back surface of the light-transmitting layer 41. The light-shielding layer 43 is a layer that has light-shielding properties and blocks light L from passing from the back to the front of the cover panel 9. The light-shielding layer 43 is constituted by a coating film containing a black pigment. The thickness of the light-shielding layer 43 is, for example, about 5 µm to 50 µm, and more preferably 8 µm to 10 µm. The light transmittance of the light-shielding layer 43 in the thickness direction is, for example, 0%.

A light-transmitting opening 45 that allows the light L to pass through is formed in a region of the light-shielding layer 43 that constitutes the light-transmitting display portion 11. The light-transmitting opening 45 is formed in a predetermined pattern for illuminated display, and in this example, in the same shape as the icon 13. The light-transmitting opening 45 is formed by irradiation with laser light. In a case where the light-shielding layer 43 is formed by screen printing, the light-transmitting opening 45 may be provided using masking, or may be included in a printing pattern.

### <Functional Module>

The functional module 50 is a mechanism that realizes illumination for illuminated display and a switch function. In addition to the switch component 55 and the switch actuating member 63, the functional module 50 includes the support panel 51, an LED (Light Emitting Diode) 57, and a compression coil spring 59. The LED 57 is an example of a light source.

The support panel 51 is disposed on the back side of the rigid portion 21 of the base material 20 at a position corresponding to the first opening 27. The support panel 51 is fixed to the plurality of bosses 29 provided on the base material 20 by using self-tapping screws 54. The support panel 51 is spaced apart from the front plate portion 23 of the rigid portion 21. The support panel 51 is provided with a light-shielding wall 53.

The light-shielding wall 53 protrudes toward the front side of the support panel 51, and is formed in a frame shape so as to correspond to an outer peripheral portion of the operation portion 15. A plurality of claw portions 53a (only one is shown in FIG. 2) is provided at a distal end of the light-shielding wall 53. The claw portions 53a are spaced apart from each other along the inner periphery of the light-shielding wall 53, and each protrude inward from the inner periphery of the light-shielding wall 53. Each claw portion 53a functions as a retaining portion that prevents the switch actuating member 63 from coming out of the light-shielding wall 53.

The switch component 55 and the LED 57 are mounted on the same substrate 61, and the substrate 61 is fixed to an inner portion of the light-shielding wall 53 of the support panel 51. The switch component 55 is disposed within the space surrounded by the light-shielding wall 53 at a position closer to the light-shielding wall 53. The switch component 55 is, for example, a tact switch and has a pressing surface that receives a pressing operation. The LED 57 is disposed at a position corresponding to the center of the space surrounded by the light-shielding wall 53. The LED 57 emits light L (strictly speaking, visible light) toward the light-transmitting display portion 11.

The switch actuating member 63 is provided within the light-shielding wall 53 of the support panel 51 so as to be movable in a pressing direction and an opposite direction, and is disposed on the back side of the base material 20 at a position corresponding to the first opening 27. The switch actuating member 63 is formed in a bottomed tubular shape conforming to the shape of the inner periphery of the light-shielding wall 53. The switch actuating member 63 includes a receiving plate portion 65 and a peripheral wall portion 67. The receiving plate portion 65 constitutes a flat surface that receives an external force caused by a pressing operation of the switch device 10. The peripheral wall portion 67 is a portion extending in a tubular shape from the peripheral edge of the receiving plate portion 65 toward the back side thereof. The outer peripheral surface of the peripheral wall portion 67 faces the inner peripheral surface of the light-shielding wall 53 and slidably contacts the inner peripheral surface of the light-shielding wall 53.

A switch contact portion 69 is integrally provided on the back end face of the peripheral wall portion 67 of the switch actuating member 63. The switch contact portion 69 protrudes toward the back side of the switch actuating member 63 and faces the pressing surface of the switch component 55. The back end face of the switch contact portion 69 is in contact with the pressing surface of the switch component 55, or is in close proximity to the pressing surface with a slight clearance therebetween. A spring insertion portion 71 is also integrally provided on the back end face of the peripheral wall portion 67 of the switch actuating member 63. The spring insertion portion 71 protrudes toward the back side of the switch actuating member 63 and faces the support panel 51.

The compression coil spring 59 is inserted over the spring insertion portion 71. The compression coil spring 59 is interposed between the peripheral wall portion 67 of the switch actuating member 63 and the support panel 51, and constantly applies to the switch actuating member 63 a biasing force that presses the switch actuating member 63 toward the front side. The switch actuating member 63 is thus maintained such that the receiving plate portion 65 is positioned within the first opening 27 of the base material 20 and held against the back surface of the soft portion 30, and such that a gap greater than the depression depth (stroke) of the switch actuating member 63 is provided between the switch actuating member 63 and the support panel 51 when the switch device 10 is not pressed.

The switch actuating member 63 is a rigid member made of synthetic resin and has light-transmitting properties. Examples of materials for the switch actuating member 63 include polycarbonate (PC), polymethyl methacrylate (PMMA), polypropylene (PP), and acrylonitrile butadiene styrene (ABS). The switch actuating member 63 is formed by injection molding.

The switch actuating member 63 and the peripheral edge of the first opening 27 of the base material 20 are positioned apart from each other in a direction orthogonal to the direction in which the switch actuating member 63 is depressed, that is, in a direction along the surface of the cover panel 9. The groove-shaped portion 33 is provided on the outer periphery of the receiving plate portion 65 of the switch actuating member 63. The groove-shaped portion 33 is bounded by the outer peripheral surface of the receiving plate portion 65 and the inner peripheral surface of the first opening 27 of the base material 20 as its side surfaces, and by the back surface of the soft portion 30 as its bottom. The distance D between the outer peripheral surface of the receiving plate portion 65 of the switch actuating member 63 and the inner peripheral surface of the first opening 27 of the base material 20 (the width of the groove-shaped portion 33), that is, the width of the stretch section 31, is, for example, 1 mm to 20 mm, and more preferably about 5 mm.

### - Operation of Switch Device -

In the switch device 10 according to the first embodiment, light L emitted from the LED 57 is directed onto the cover panel 9 from the back side of the base material 20. This light L passes through the switch actuating member 63 and the soft portion 30 of the base material 20 and illuminates the corresponding light-transmitting display portion 11 from the back side. The illumination light L then passes through the skin material 40 through the light-transmitting opening 45 to display the icon 13. As a result, the light-transmitting display portion 11 illuminates and displays the icon 13. When the light-transmitting display portion 11 is illuminated, the operation portion 15 of the switch device 10 becomes visible.

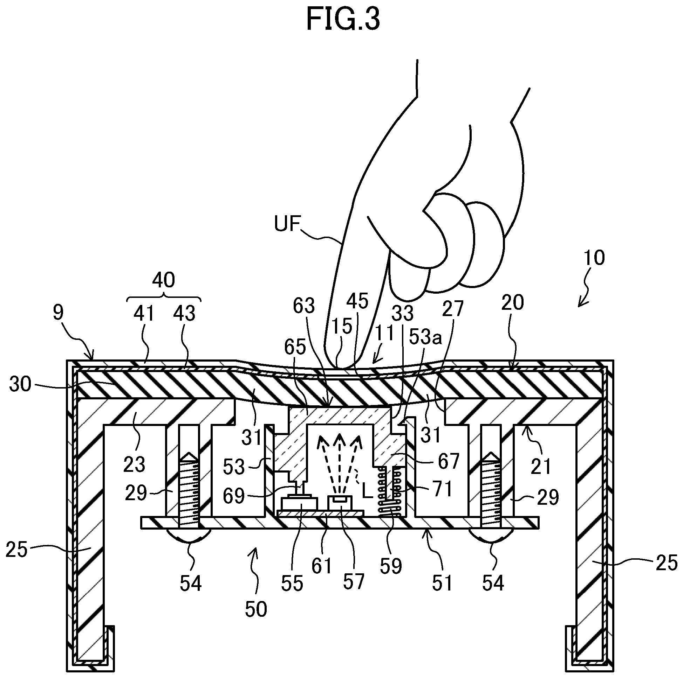

In the switch device 10, as shown in FIG. 3, when a user presses the operation portion 15 with a finger UF, the soft portion 30 undergoes bending deformation toward the back side of the base material 20 according to the degree of the pressing, whereby a pressing force is exerted on the switch actuating member 63 via the soft portion 30. Accordingly, the switch actuating member 63 is moved toward the support panel 51 against the biasing force of the compression coil spring 59, and the pressing surface of the switch component 55 is pressed by the switch contact portion 69. A pressing operation is thus performed on the switch component 55.

In the switch device 10, when the user releases the pressing on the operation portion 15, the soft portion 30 recovers from its deformation by elastic recovery. At the same time, along with the deformation recovery of the soft portion 30, the switch actuating member 63 is urged toward the front side by the biasing force of the compression coil spring 59, thereby moving toward the front side. The operation portion 15 thus returns to its state before being pressed. As a result, the switch contact portion 69 no longer presses the pressing surface of the switch component 55, whereby the pressing operation on the switch component 55 is released.

### - Method for Manufacturing Switch Device -

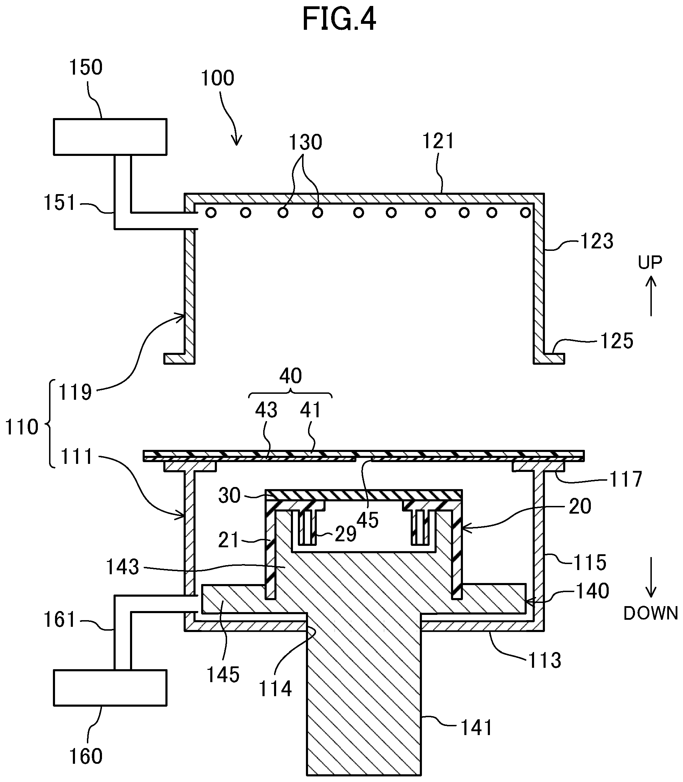

To manufacture the switch device 10, the base material 20 having a flat surface is first prepared by integrally molding the rigid portion 21 and the soft portion 30. Such a base material 20 can be molded using two-shot molding. Next, the skin material 40 is laminated on the surface of the base material 20 by using vacuum pressure forming. A vacuum pressure forming apparatus 100 as shown in FIG. 4 is used for the operation of laminating the skin material 40 on the surface of the base material 20.

The vacuum pressure forming apparatus 100 includes a forming box 110, heaters 130, a base-material support 140, a vacuum-pressurizing device 150, and a vacuum device 160. In the description of the first embodiment, the upper and lower sides of the vacuum pressure forming apparatus 100 are defined as shown in the figures. However, these are defined merely for convenience of description, and the orientation of the vacuum pressure forming apparatus 100 may be changed such that, for example, the up-down direction becomes the left-right direction (horizontal direction).

The forming box 110 includes a lower box member 111 and an upper box member 119. The lower box member 111 and the upper box member 119 are portions into which the forming box 110 is divided, and are arranged such that their respective openings are aligned with each other in the up-down direction. The lower box member 111 is positioned on the lower side with its opening facing upward. The upper box member 119 is positioned on the upper side with its opening facing downward.

The lower box member 111 has a bottom wall portion 113 and a lower peripheral wall portion 115. The lower peripheral wall portion 115 extends upward from the peripheral edge of the bottom wall portion 113. A lower flange 117 is provided at the upper end of the lower peripheral wall portion 115. The lower flange 117 includes a portion protruding horizontally outward from the outer periphery of the lower peripheral wall portion 115 and a portion protruding horizontally inward from the inner periphery of the lower peripheral wall portion 115. The upper surface of the lower flange 117 is a portion on which the skin material 40 is placed.

The upper box member 119 has an upper wall portion 121 and an upper peripheral wall portion 123. The upper peripheral wall portion 123 extends downward from the peripheral edge of the upper wall portion 121. An upper flange 125 is provided at the lower end of the upper peripheral wall portion 123. The upper flange 125 protrudes horizontally outward from the outer periphery of the upper peripheral wall portion 123. The lower surface of the upper flange 125 is a portion that, when the forming box 110 is in a closed state, holds the skin material 40 by clamping it between the upper flange 125 and the lower flange 117.

A box moving device, not shown, is connected to the upper box member 119. The box moving device moves the upper box member 119 in a direction toward and away from the lower box member 111 (in this example, the up-down direction). The box moving device is constituted by, for example, a fluid-pressure cylinder operated by fluid pressure. The box moving device is controlled by a forming control device, not shown.

In the closed state of the forming box 110, the box moving device moves the upper box member 119 upward to separate it from the lower box member 111, thereby bringing the forming box 110 into an open state. In the open state of the forming box 110, the box moving device moves the upper box member 119 downward toward the lower box member 111, thereby bringing the upper flange 125 and the lower flange 117 together to clamp the skin material 40 therebetween and thus bringing the forming box 110 into the closed state.

The heaters 130 are disposed within the upper box member 119. Specifically, the heaters 130 are arranged in an upper portion of the upper box member 119 so as to be aligned along the inner surface of the upper wall portion 121. The heaters 130 are heating devices for heating and softening the skin material 40. The heaters 130 are controlled by the forming control device. The heating temperature by the heaters 130 is set so as not to thermally damage the skin material 40.

The base-material support 140 includes a base portion 141 and a support portion 143. The base portion 141 extends in the up-down direction and is inserted through a through hole 114 formed in the lower box member 111. The base portion 141 protrudes downward beyond the bottom wall portion 113 of the lower box member 111. The support portion 143 is provided on the upper side of the base portion 141 and disposed within the lower box member 111.

The base material 20 is placed on the support portion 143 so as to cover it. The support portion 143 holds the base material 20 in an orientation such that the surface of the soft portion 30 faces upward. A sealing wall portion 145 is provided at a lower peripheral edge portion of the support portion 143. The sealing wall portion 145 protrudes outward from the outer periphery of the support portion 143, and comes into contact with the lower surface of the inner peripheral portion of the lower flange 117 when the base-material support 140 is moved in a direction toward the internal space of the upper box member 119.

A base-material moving device (not shown) is connected to the base portion 141. The base-material moving device moves the base-material support 140 in a direction toward and away from the internal space of the upper box member 119 (in this example, the up-down direction). The base-material moving device is constituted by, for example, a fluid-pressure cylinder operated by fluid pressure. The base-material moving device is controlled by the forming control device, not shown.

The vacuum-pressurizing device 150 is connected to the interior of the upper box member 119 via an upper pipe 151. The vacuum-pressurizing device 150 includes a vacuum pump and an atmospheric release valve (not shown). The vacuum-pressurizing device 150 is configured to evacuate a front-side space R2 formed within the forming box 110 so as to bring the pressure of the front-side space R2 to vacuum pressure. In the present specification, "vacuum" is not limited to a strict vacuum, and may be any degree of vacuum that is achievable in industrial practice.

The vacuum-pressurizing device 150 is capable of bringing the pressure of the front-side space R2 to atmospheric pressure by opening the atmospheric release valve after bringing the pressure of the front-side space R2 to vacuum pressure. The vacuum-pressurizing device 150 may include a pressurizing pump. By providing the vacuum-pressurizing device 150 with the pressurizing pump, the pressure of the front-side space R2 can be raised to a pressure higher than atmospheric pressure by the pressurizing pump after the pressure of the front-side space R2 is brought to vacuum pressure by the vacuum pump. The vacuum-pressurizing device 150 is controlled by the forming control device.

The vacuum device 160 is connected to the interior of the lower box member 111 via a lower pipe 161. The vacuum device 160 includes a vacuum pump and an atmospheric release valve (not shown). The vacuum device 160 is configured to evacuate a back-side space R1 formed within the forming box 110 so as to bring the pressure of the back-side space R1 to vacuum pressure. The vacuum device 160 is capable of bringing the pressure of the back-side space R1 to atmospheric pressure by opening the atmospheric release valve after bringing the pressure of the back-side space R1 to vacuum pressure. The vacuum device 160 is controlled by the forming control device.

To laminate the skin material 40 on the surface of the base material 20 using the vacuum pressure forming apparatus 100, portions of the vacuum pressure forming apparatus 100 may be controlled by the forming control device to execute operations in the steps as described below, or an operator may operate portions of the vacuum pressure forming apparatus 100 to perform operations in the steps described below.

First, a preparation step is performed. In the preparation step, the upper box member 119 is moved upward by the box moving device. The forming box 110 is thus brought into the open state. In addition, the base-material support 140 is moved downward by the base-material moving device. Then, in the forming box 110 in the open state, the base material 20 is placed and held on the support portion 143 of the base-material support 140.

At this time, a joining material such as an adhesive or a pressure-sensitive adhesive is provided on the surface of the soft portion 30 of the base material 20, or the base material 20 on which the joining material has been provided in advance is used. Further, the skin material 40 prepared in advance is held on the upper surface of the lower flange 117 of the lower box member 111, and is arranged so as to cover the opening of the lower box member 111. The joining material may be provided on a region of the back surface of the skin material 40 corresponding to the soft portion 30 of the base material 20, instead of on the surface of the soft portion 30 of the base material 20.

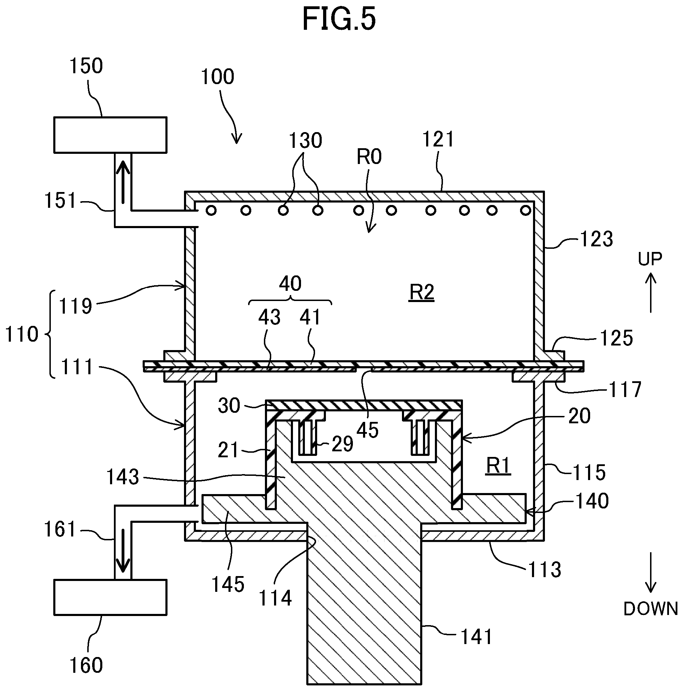

Thereafter, as shown in FIG. 5, the upper box member 119 is moved downward by the box moving device, thereby bringing the upper box member 119 and the lower box member 111 together to clamp the skin material 40 between the upper flange 125 and the lower flange 117, and forming a sealed vacuum chamber R0 within the forming box 110. The vacuum chamber R0 includes the front-side space R2 and the back-side space R1. The front-side space R2 is a space on the side that the front surface of the skin material 40 faces. The back-side space R1 is a space on the side that the back surface of the skin material 40 faces.

After the preparation step, a heating step and an evacuation step are performed. In the heating step, the skin material 40 is heated and softened by heat from the heaters 130. In the evacuation step, the vacuum pump of the vacuum-pressurizing device 150 is operated to evacuate the front-side space R2, and the vacuum pump of the vacuum device 160 is operated to evacuate the back-side space R1. The heating step and the evacuation step may be performed simultaneously, the heating step may be performed earlier than the evacuation step, or the evacuation step may be performed earlier than the heating step.

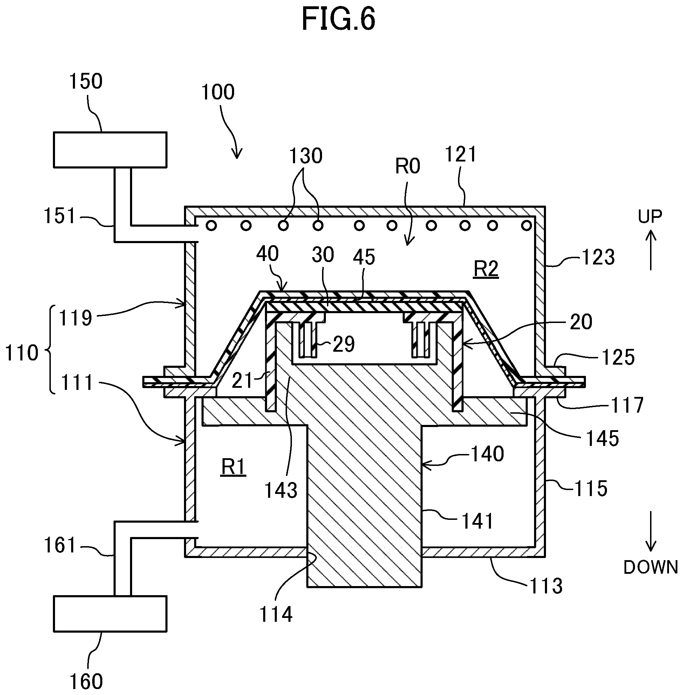

When it is estimated that the temperature of the skin material 40 has reached a softening temperature and evacuation of the front-side space R2 and the back-side space R1 is completed, a skin pressing step is performed. In the skin pressing step, as shown in FIG. 6, the base-material support 140 is moved upward by the base-material moving device. The surface of the base material 20 is thus pressed against the back surface of the skin material 40, so that the softened skin material 40 is formed so as to conform to the surface of the base material 20.

At this time, since the back-side space R1 and the front-side space R2 are evacuated, entry of air between the base material 20 and the skin material 40 can be suppressed. Furthermore, when the base-material support 140 moves to the upper position, the upper surface of the sealing wall portion 145 comes into contact with the lower surface of the inner peripheral portion of the lower flange 117. Airtightness between the back-side space R1 and the front-side space R2 is thus ensured.

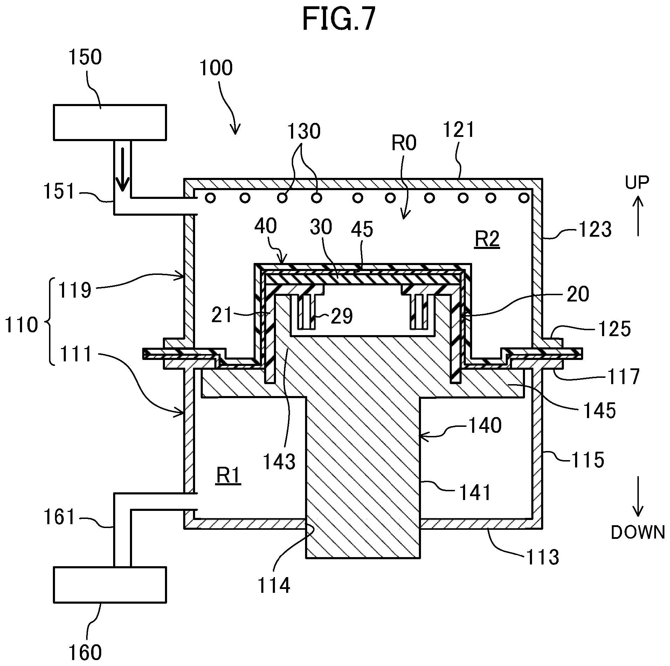

Subsequently, a pressurizing step is performed. In the pressurizing step, the pressure of the front-side space R2 is made higher than the pressure of the back-side space R1. Specifically, as shown in FIG. 7, the pressure of the front-side space R2 is made higher than the pressure of the back-side space R1 by opening the atmospheric release valve of the vacuum-pressurizing device 150 to bring the front-side space R2 to atmospheric pressure. At this time, the front-side space R2 may be pressurized to a pressure higher than atmospheric pressure. The skin material 40 can thus be brought into close contact with the surface of the base material 20 and laminated thereon with good conformability.

Thereafter, the skin material 40 is cooled. When the skin material 40 has solidified by this cooling, a removal step is performed. In the removal step, the atmospheric release valve of the vacuum device 160 is opened to bring the back-side space R1 to atmospheric pressure. Further, the upper box member 119 is moved upward by the box moving device to open the forming box 110. The base material 20 with the skin material 40 is removed from the forming box 110 in the open state.

Thereafter, a post-processing step is performed. In the post-processing step, first, an excess portion of the skin material 40 is cut off. Then, an outer peripheral portion of the skin material 40 is wrapped around to the back side of the base material 20 and is fixed to the rigid portion 21 of the base material 20 using a joining material such as double-sided tape or an adhesive, or staples or the like. In this manner, the skin material 40 can be laminated on the surface of the base material 20. The base material 20 with the skin material 40 thus prepared constitutes the cover panel 9.

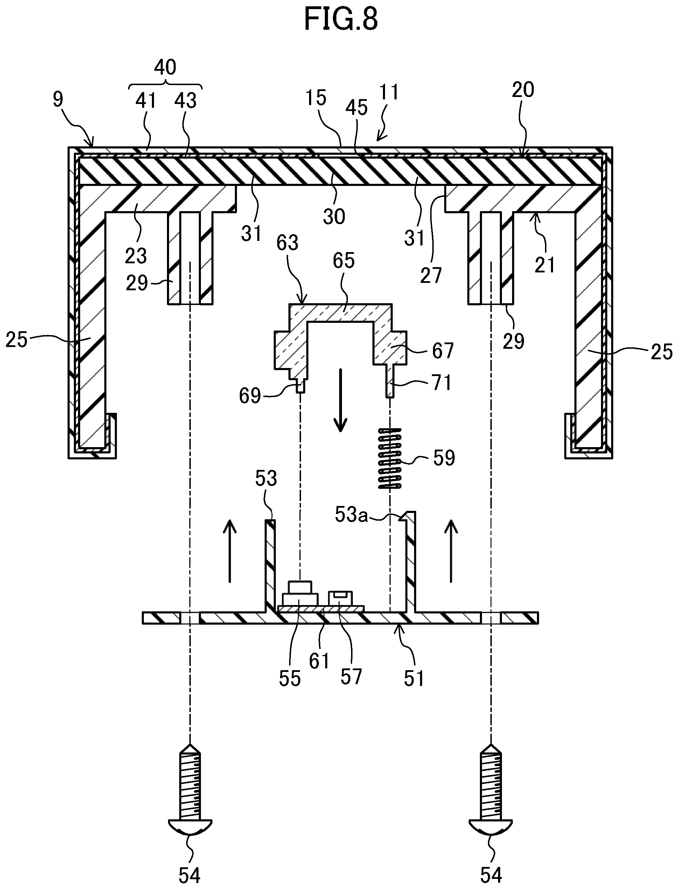

Subsequently, as shown in FIG. 8, other members constituting the functional module 50 are assembled to the base material 20 with the skin material 40. At this time, the support panel 51 on which the substrate 61 having the switch component 55 and the LED 57 mounted thereon is installed in advance, the switch actuating member 63, and the compression coil spring 59 are prepared.

First, the compression coil spring 59 is inserted over the spring insertion portion 71 of the switch actuating member 63. Next, the switch actuating member 63 with the compression coil spring 59 is fitted into the interior of the light-shielding wall 53 and supported by the support panel 51. Then, the support panel 51, on which the substrate 61 having the switch component 55 and the LED 57 mounted thereon, the switch actuating member 63, and the compression coil spring 59 are mounted, is fixed to the bosses 29 of the base material 20 using the self-tapping screws 54. The support panel 51 is thus attached to the base material 20.

The switch device 10 can be manufactured in this manner.

### - Features of First Embodiment -

In the switch device 10 according to the first embodiment, the switch actuating member 63 and the peripheral edge of the first opening 27 of the base material 20 are positioned apart from each other in a direction orthogonal to the direction in which the switch actuating member 63 is depressed. The soft portion 30 having rubber elasticity is provided between the skin material 40 and the switch actuating member 63. The soft portion 30 is supported by the base material 20 and positioned on the front side of the first opening 27, and has the stretch section 31 constituting a portion corresponding to the region between the switch actuating member 63 and the peripheral edge of the first opening 27 of the base material 20. When the switch actuating member 63 is depressed through the skin material 40, the soft portion 30 undergoes bending deformation accompanied by elongation of the stretch section 31. At this time, since the deflection occurring in the soft portion 30 is relatively gradual, local elongation occurring in the skin material 40 is reduced. As a result, it is possible to suppress permanent deformation of the pressed portion of the skin material 40.

In the switch device 10 according to the first embodiment, the skin material 40 and the soft portion 30 are bonded to each other in a region corresponding to the first opening 27 of the base material 20. When the soft portion 30 undergoes bending deformation due to a depressing operation on the switch actuating member 63, the skin material 40 similarly undergoes bending deformation in accordance with the deformation of the soft portion 30. As a result, elongation occurring in the skin material 40 can be distributed around the pressed portion. This contributes to suppressing permanent deformation of the pressed portion of the skin material 40.

In the switch device 10 according to the first embodiment, the first opening 27 of the base material 20 is covered by the soft portion 30 provided on the front side of the rigid portion 21. Since the first opening 27 of the base material 20 is covered by the soft portion 30, a seam between the rigid portion 21 and the soft portion 30 is not formed on the front side, and no parting line appears on the skin material 40. Accordingly, the aesthetic appearance of the switch device 10 can be improved.

In the switch device 10 according to the first embodiment, the base material 20 includes the rigid portion 21 and the soft portion 30. The base material 20 can be molded by two-shot molding. By using such a two-shot molded article as the base material 20, the number of parts and the assembly man-hours required for manufacturing the switch device 10 can be reduced.

In the method for manufacturing the switch device 10 according to the first embodiment, the base material 20 having a flat surface is prepared by integrally molding the rigid portion 21 and the soft portion 30, and the skin material 40 is laminated on the surface of the base material 20. In the step of laminating the skin material 40, vacuum pressure forming is used. With the vacuum pressure forming, the skin material 40 can be laminated on the surface of the base material 20 with good conformability. As a result, formation of steps on the surface of the skin material 40 can be suppressed. This contributes to manufacturing the switch device 10 with an excellent appearance.

### <<Second Embodiment>>

The switch device 10 according to a second embodiment differs from the first embodiment in the configuration of the base material 20. In the second embodiment, the switch device 10 is configured in the same manner as in the first embodiment, except for the configuration of the base material 20. Therefore, configurations of the switch device 10 that differ from those of the first embodiment will be described, and detailed description of the matters related to the same configurations will be omitted by referring to the description of the first embodiment.

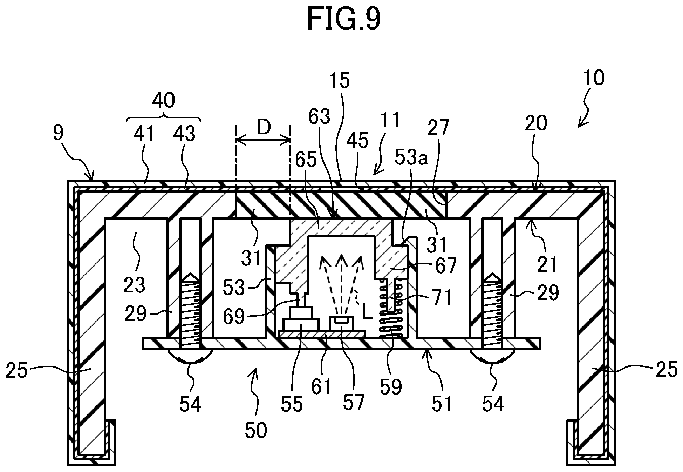

As shown in FIG. 9, in the switch device 10 according to the second embodiment, the soft portion 30 of the base material 20 is provided only within the first opening 27 of the rigid portion 21. In the present example as well, the base material 20 is formed by integrally molding the rigid portion 21 and the soft portion 30 by two-shot molding. The soft portion 30 is provided so as to close the first opening 27 of the rigid portion 21. The outer peripheral surface of the soft portion 30 is joined to the inner peripheral surface of the first opening 27 of the rigid portion 21.

The surface of the soft portion 30 and the surface of the rigid portion 21 are flush with each other. Accordingly, the surface of the base material 20 is configured as a flat surface. As used in the present specification, "flush" means being parallel without a step, but it does not have to be strictly flush and may be substantially flush with a step within a range of manufacturing tolerance. The skin material 40 covers the surface of the base material 20 (in this example, the surface of the rigid portion 21 and the surface of the soft portion 30) and the side plate portions 25, and as in the first embodiment, is wrapped around to the back side of the base material 20 and fixed thereto. The soft portion 30 is bonded to the skin material 40 using a joining material such as an adhesive or a pressure-sensitive adhesive. The skin material 40 may also be bonded to the surface of the rigid portion 21.

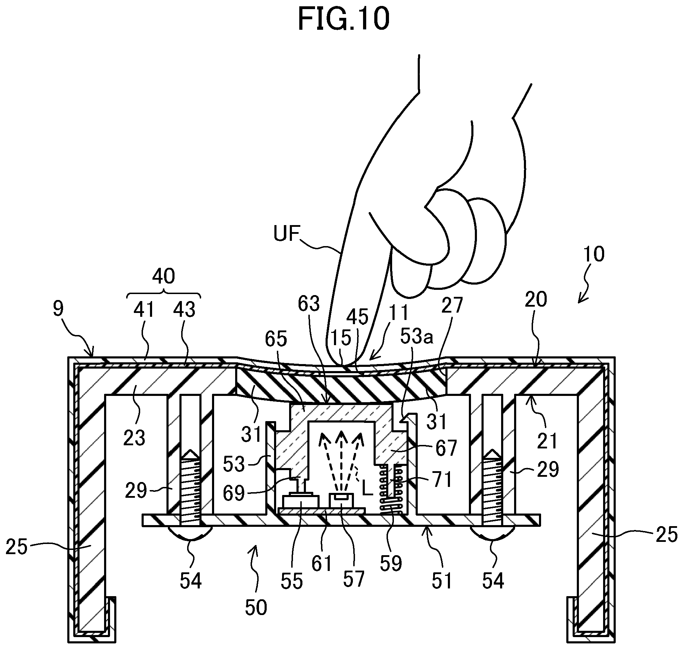

In the switch device 10 according to the second embodiment as well, as shown in FIG. 10, when the user presses the operation portion 15 with a finger UF, the soft portion 30 undergoes bending deformation toward the back side of the base material 20 according to the degree of the pressing, whereby a pressing force is exerted on the switch actuating member 63 via the soft portion 30. Accordingly, the switch actuating member 63 is moved backward toward the support panel 51 against the biasing force of the compression coil spring 59, and the pressing surface of the switch component 55 is pressed by the switch contact portion 69. A pressing operation is thus performed on the switch component 55.

In the switch device 10 as well, when the user releases the pressing on the operation portion 15, the soft portion 30 recovers from its deformation by elastic recovery. At the same time, along with the deformation recovery of the soft portion 30, the switch actuating member 63 is urged toward the front side and advances by the biasing force of the compression coil spring 59. The operation portion 15 thus returns to its state before being pressed. As a result, the switch contact portion 69 no longer presses the pressing surface of the switch component 55, whereby the pressing operation on the switch component 55 is released.

### - Features of Second Embodiment -

In the switch device 10 according to the second embodiment, the first opening 27 of the rigid portion 21 is closed by the soft portion 30. The surface of the soft portion 30 and the surface of the rigid portion 21 are flush with each other. This can suppress formation of a step at the boundary between the peripheral edge of the first opening 27 of the base material 20 and the soft portion 30. As a result, a parting line corresponding to a seam between the rigid portion 21 and the soft portion 30 can be made less likely to be reflected on the skin material 40. This contributes to improving the aesthetic appearance of the switch device 10.

### <<Third Embodiment>>

The switch device 10 according to a third embodiment differs from the first embodiment in the configuration of the base material 20. In the third embodiment, the switch device 10 is configured in the same manner as in the first embodiment, except for the configuration of the base material 20. Therefore, configurations of the switch device 10 that differ from those of the first embodiment will be described, and detailed description of the matters related to the same configurations will be omitted by referring to the description of the first embodiment.

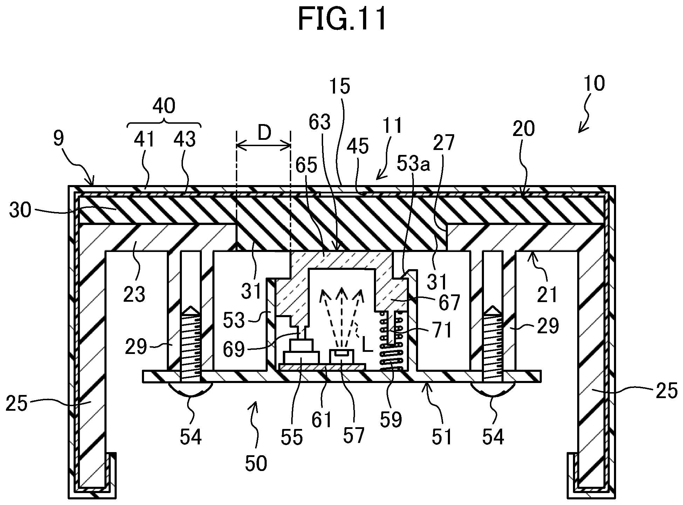

As shown in FIG. 11, in the switch device 10 according to the third embodiment, the soft portion 30 of the base material 20 is provided so as to be positioned within the first opening 27 of the rigid portion 21 and on the front side of the first opening 27. In this example as well, the base material 20 is formed by integrally molding the rigid portion 21 and the soft portion 30 by two-shot molding. The soft portion 30 is laminated on the surface of the front plate portion 23 of the rigid portion 21. The soft portion 30 is provided on the front side of the rigid portion 21 so as to cover the first opening 27, and is also provided within the first opening 27.

### - Features of Third Embodiment -

In the switch device 10 according to the third embodiment, the soft portion 30 of the base material 20 is provided so as to be positioned within the first opening 27 of the rigid portion 21 and on the front side of the first opening 27. This allows the soft portion 30 constituting the operation portion 15 to have a relatively large thickness. Ease of bending of the soft portion 30 when a pressing operation of the switch device 10 is performed varies depending on the thickness of the soft portion 30. Therefore, the pressing force to be applied to the operation portion 15 to perform a pressing operation of the switch device 10 can be adjusted.

### <<Fourth Embodiment>>

The switch device 10 according to a fourth embodiment differs from the first embodiment in the configuration of the base material 20 and in that a cushioning material 80 is provided. In the fourth embodiment, the switch device 10 is configured in the same manner as in the first embodiment, except for the configuration of the base material 20 and the provision of the cushioning material 80. Therefore, configurations of the switch device 10 that differ from those of the first embodiment will be described, and detailed description of the matters related to the same configurations will be omitted by referring to the description of the first embodiment.

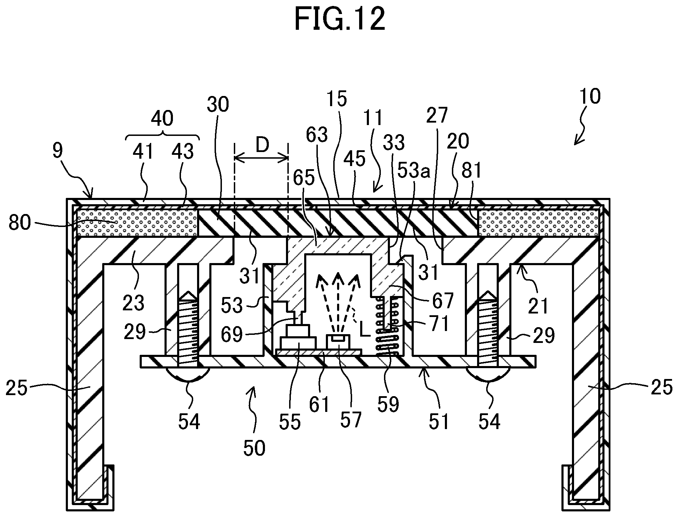

As shown in FIG. 12, in the switch device 10 according to the fourth embodiment, the soft portion 30 of the base material 20 is provided only in a region corresponding to the front side of the first opening 27 of the rigid portion 21 and at an outer peripheral portion of the first opening 27 on the surface of the rigid portion 21. In this example as well, the base material 20 is formed by integrally molding the rigid portion 21 and the soft portion 30 by two-shot molding. The soft portion 30 is supported by the outer peripheral portion of the first opening 27 of the rigid portion 21 and positioned on the front side of the first opening 27, and is provided on the front side of the rigid portion 21 so as to cover the first opening 27. In this example, the soft portion 30 is not provided within the first opening 27.

The cushioning material 80 is provided on a region of the surface of the rigid portion 21 where the soft portion 30 is not provided. The cushioning material 80 is made of a foamed resin such as foamed polyurethane (PU), and has both flexibility and elasticity. A second opening 81 is formed in the cushioning material 80. The second opening 81 is formed at a position and in a shape corresponding to the soft portion 30 of the base material 20. The soft portion 30 of the base material 20 is fitted into the second opening 81. The thickness of the cushioning material 80 and the thickness of the soft portion 30 are substantially the same.

The surface of the cushioning material 80 and the surface of the soft portion 30 are flush with each other. Accordingly, the surface of the base material 20 is configured as a flat surface. The skin material 40 covers the surface of the base material 20 (in this example, the surface of the soft portion 30 and the surface of the cushioning material 80) and the side plate portions 25, and as in the first embodiment, is wrapped around to the back side of the base material 20 and fixed thereto. The soft portion 30 is bonded to the skin material 40 using a joining material such as an adhesive or a pressure-sensitive adhesive. The skin material 40 may also be bonded to the surface of the cushioning material 80.

### - Features of Fourth Embodiment -

In the switch device 10 according to the fourth embodiment, the soft portion 30 of the base material 20 is provided only in a region corresponding to the first opening 27 of the rigid portion 21 and its surrounding area, and the cushioning material 80 is provided on a region of the surface of the rigid portion 21 where the soft portion 30 is not provided. The cushioning material 80 imparts cushioning properties to the surface of the cover panel 9. This can improve the feel of the surface of the cover panel 9. In addition, the tactile feel of the surface of the cover panel 9 can be made different between a region corresponding to the soft portion 30 and a region corresponding to the cushioning material 80. This is useful for identifying the position of the operation portion 15 by the tactile feel of the surface of the cover panel 9.

### <<Other Embodiments>>

In the first to fourth embodiments, the compression coil spring 59 is used to constantly apply to the switch actuating member 63 a biasing force that presses the switch actuating member 63 toward the front side. However, the present disclosure is not limited to this. A spring member other than the compression coil spring 59 may be used to constantly apply the above biasing force to the switch actuating member 63, and the function of constantly applying a biasing force to the switch actuating member 63 may be provided in the switch component 55 without using a spring member.

In the first to fourth embodiments, the light-shielding wall 53 is provided integrally with the support panel 51. However, the present disclosure is not limited to this. The light-shielding wall 53 may be provided integrally with the rigid portion 21 of the base material 20. Alternatively, the light-shielding wall 53 may be a separate member from the support panel 51. That is, the switch device 10 may include a member serving as the light-shielding wall 53, separately from the support panel 51.

The first to fourth embodiments illustrate an example in which the cover panel 9 includes the light-transmitting display portion 11, and the icon 13 displayed in the light-transmitting display portion 11 indicates the position of the operation portion 15 of the switch device 10. However, the present disclosure is not limited to this. For example, the icon 13 may be printed on a portion of the cover panel 9 that constitutes the operation portion 15 of the switch device 10. In this case, the switch device 10 does not include a light source such as the LED 57, and no light-transmitting opening 45 is formed in the light-shielding layer 43 of the skin material 40.

In the first to fourth embodiments, in manufacturing the switch device 10, the skin material 40 is laminated on the surface of the base material 20 using vacuum pressure forming. However, the present disclosure is not limited to this. For example, the step of laminating the skin material 40 on the surface of the base material 20 may be performed by pressure forming in which the skin material 40 is pressurized by compressed air and thus pressed against the surface of the base material 20.

In the first to fourth embodiments, the base material 20 is formed by integrally molding the rigid portion 21 and the soft portion 30 by two-shot molding. However, the present disclosure is not limited to this. The base material 20 may be constituted only by the rigid portion 21, and the soft portion 30 may be constituted by a soft member separate from the base material 20. In this case, the soft member is fixed to the base material using an adhesive or the like. In the fourth embodiment, the soft portion 30 and the cushioning material 80 may be integrally molded by two-shot molding.

In the first to fourth embodiments, the light-shielding layer 43 is provided in the skin material 40. However, the present disclosure is not limited to this. For example, the light-shielding layer 43 may be provided on the front or back surface of the soft portion 30, or may be provided on the front or back surface of the switch actuating member 63.

The first to fourth embodiments illustrate an example in which the switch device 10 is incorporated in the center console 1. However, the present disclosure is not limited to this. The switch device 10 according to the present disclosure can also be incorporated into other vehicle interior components such as an instrument panel, a door trim, a pillar trim, and a sun visor. The switch device 10 according to the present disclosure is widely applicable to various products other than vehicle applications, such as home appliances and game consoles.

As described above, preferred embodiments have been described as examples of the technology of the present disclosure. However, the technology of the present disclosure is not limited to them, and is also applicable to embodiments in which modifications, replacements, additions, omissions, and the like are made as appropriate. It will be understood by those skilled in the art that various other modifications can be made to the above embodiments without departing from the spirit of the technology of the present disclosure, and that such modifications also fall within the scope of the technology of the present disclosure.

The terms such as "first" and "second" in the above description are used merely to distinguish the elements to which these terms are assigned, and do not limit the number or order of such elements. Further, the term "to" indicating a numerical range means that the numerical range includes the values before and after "to." That is, in a case where X and Y represent numerical values, the expression "X to Y" indicates a range of "X or more and Y or less."

### INDUSTRIAL APPLICABILITY

As described above, the present disclosure is useful for a switch device and a method for manufacturing the same.

### DESCRIPTION OF REFERENCE CHARACTERS

- 10: switch device
- 20: base material
- 21: rigid portion
- 27: first opening (opening)
- 30: soft portion
- 31: stretch section
- 40: skin material
- 63: switch actuating member

## Claims

1. A switch device, comprising:
a base material (20) including a rigid portion (21) having an opening (27);
a skin material (40) provided on a front side of the base material (20) so as to cover the opening (27); and
a switch actuating member (63) disposed on a back side of the base material (20) at a position corresponding to the opening (27),
the switch device being configured such that, when the skin material (40) is pressed, a pressing force is exerted on the switch actuating member (63) to depress the switch actuating member (63), wherein
the switch actuating member (63) and a peripheral edge of the opening (27) are positioned apart from each other in a direction orthogonal to a direction in which the switch actuating member (63) is depressed,
a soft portion (30) that is more flexible than the rigid portion (21) and has rubber elasticity is provided between the skin material (40) and the switch actuating member (63), and
the soft portion (30) is supported by the rigid portion (21) and is positioned within the opening (27) or on a front side of the opening (27), and includes a stretch section (31) that constitutes a portion corresponding to a region between the switch actuating member (63) and the peripheral edge of the opening (27).

2. The switch device of claim 1, wherein
the skin material (40) and the soft portion (30) are bonded to each other in a region corresponding to the opening (27).

3. The switch device of claim 1 or 2, wherein
the soft portion (30) is provided on a front side of the rigid portion (21) so as to cover the opening (27).

4. The switch device of claim 1 or 2, wherein
the soft portion (30) is provided so as to close the opening (27) of the rigid portion (21), and
a surface of the soft portion (30) and a surface of the rigid portion (21) are flush with each other.

5. The switch device of claim 1 or 2, wherein
the soft portion (30) and the rigid portion (21) are integrally molded to constitute the base material (20).

6. A method for manufacturing the switch device of claim 1, the method comprising:
preparing a base material (20) having a flat surface, the base material (20) including a rigid portion (21) and a soft portion (30) that are integrally molded; and
laminating the skin material (40) on the flat surface of the base material (20) by vacuum pressure forming or pressure forming.
